# EUROPEAN PATENT APPLICATION

(11) **EP 4 421 575 A1**
(43) Date of publication of application: **28.08.2024**
(21) Application number: 23157700.8
(22) Date of filing: 21.02.2023
(51) Int. Cl.: G05B 19/418

(54) **METHOD AND SYSTEM FOR CONTROLLING A PRODUCTION SYSTEM TO MANUFACTURE A PRODUCT**

(71) Applicant: Siemens Aktiengesellschaft, 80333 München (DE)
(72) Inventor: DEPEWEG, Stefan, 13627 Berlin (DE); HEESCHE, Kai, 81539 München (DE); AMINE-EDDINE, Gabriel, GU46 6AL Yateley (GB)
(74) Representative: Siemens Patent Attorneys

(57) **Abstract**

A machine learning module (BNN) is provided trained to generate from a design data record (DR) specifying a design variant, a predictive performance distribution (PD) and a constraint compliance distribution (CCD) of the design variant. Furthermore, a variety of design data records (DR) is generated, for each of which the following steps are performed:
- A predictive performance distribution (PD) and a constraint compliance distribution (CCD) are generated by the machine learning module (BNN).
- The predictive performance distribution (PD) is compared with performance values (PPV) of previously evaluated design data records.
- Depending on the constraint compliance distribution (CCD) and the comparison, a simulation (SIM) of the corresponding design variant is either run or skipped.
- A design evaluation record (DER) is output which comprises a performance value and constraint compliance data each derived from the simulation if the simulation is run or, otherwise, each derived from the predictive performance distribution (PD) and the constraint compliance distribution (CCD). Depending on the design evaluation records (DER), a performance-optimizing and constraint-compliant design data record (ODR) is selected from the variety of design data records (DR). The selected design data record (ODR) is then output for controlling the production system (PP).

## Description

Nowadays, the production of complex products like e.g., robots, motors, turbines, turbine blades, combustion engines, machining tools, vehicles, or their components often relies on sophisticated design systems. Such design systems usually provide design data which specify the product to be manufactured in detail. By such design data a modern production system can be specifically controlled to manufacture the specified product.

In order to optimize a performance of a product with regard to given objectives or constraints, it is often aspired to automatically optimize the design data for the product. Such a performance may pertain to a power, a yield, a speed, a running time, a precision, an error rate, a resource consumption, an efficiency, a pollutant emission, a stability, a wear, a lifetime and/or other target parameters of the product. For the purpose of optimizing the performance, some design systems use so-called multi-disciplinary optimization (MDO) tools. These tools usually simulate design variants of a product as specified by various design data and look for those design data which optimize the simulated performance of the product.

Such simulations, however, often consume a high amount of computational resources to determine the performance for each design variant. To reduce the computing demand, so-called surrogate models, e.g., based on machine learning, may be used to predict the outcome of a simulation. Such surrogate models, however, often have a poor accuracy.

It is an object of the present invention to provide a method and a system for controlling a production system to manufacture a product, that allow for a more efficient design optimization.

This object is achieved by a method according to patent claim 1, a system according to patent claim 9, a computer program product according to patent claim 10, and a computer readable storage medium according to patent claim 11.

For controlling a production system to manufacture a product satisfying a predefined technical constraint, a trained machine learning module is provided. The machine learning module is trained to generate from a design data record specifying a design variant of the product
- a predictive performance distribution of a performance of that design variant and
- a constraint compliance distribution of a fulfillment or violation of the constraint by that design variant. Here and in the following, a component or subproduct of a composite product may also be considered as a product. The performance may pertain to a power, a yield, an efficiency, a speed, a running time, a precision, an error rate, a tendency to oscillate, a resource consumption, an aerodynamic efficiency, an energy efficiency, a pollutant emission, a stability, a wear, a lifetime and/or to other design objectives of the product. The constraint may pertain e.g., to a temperature limit, a pressure limit, a speed limit, a geometrical limit, and/or to another limit. Furthermore, a variety of design data records each specifying a different design variant of the product is generated. For a respective generated design data record, the following steps are performed:
- A predictive performance distribution and a constraint compliance distribution are generated by the machine learning module.
- The predictive performance distribution is compared with performance values of previously evaluated design data records.
- Depending on the constraint compliance distribution and the comparison, a simulation of the corresponding design variant is either run or skipped.
- A design evaluation record is output which comprises a performance value and constraint compliance data each derived from the simulation if the simulation is run or, otherwise, each derived from the predictive performance distribution and the constraint compliance distribution.

Depending on the design evaluation records, a performance-optimizing and constraint-compliant design data record is selected from the variety of design data records. The selected design data record is then output for controlling the production system.

The predictive performance distribution and/or the constraint compliance distribution may be particularly represented by a probability distribution, a discrete probability distribution or a statistical sample. Alternatively or additionally, they may be represented by a statistical mean or median together with a statistical variance, a statistical standard deviation, a confidence interval, and/or an error interval. Such statistical distributions may be considered as distributions of plausible predictions. In particular, an expected performance value may be determined as a statistical mean or median of the predictive performance distribution.

For performing the inventive method, a system, a computer program product, and a non-transient computer readable storage medium are provided.

The inventive method and/or the inventive system may be implemented by means of one or more processors, computers, application specific integrated circuits (ASIC), digital signal processors (DSP), programmable logic controllers (PLC), and/or field-programmable gate arrays (FPGA). Moreover, the inventive method may be executed in a cloud and/or in an edge computing environment.

The invention allows to skip particular expensive simulations in cases where a prediction of the machine learning module indicates that a design variant is likely to violate a constraint and/or is likely to perform worse than previously assessed design variants. In this way, the number of simulations and, therefore, a computational effort may be reduced considerably without significantly overlooking promising design variants. In many cases, the machine learning model can be used as an efficient surrogate model for evaluating the design variants.

Particular embodiments of the invention are specified by the dependent claims.

According to a preferred embodiment of the invention, the machine learning module may comprise or implement a Bayesian machine learning model, a Bayesian neural network, a Gaussian process model and/or another uncertainty-aware machine learning model. For the preceding models, many efficient learning methods are known which allow to train the models to generate predictions in the form of statistical distributions in a consistent and/or uniform way.

According to a further embodiment of the invention, it may be checked by means of the constraint compliance distribution of the respective generated design data record, whether a probability of violating the constraint exceeds a first predefined threshold value. The corresponding simulation may be skipped if the predefined threshold value is exceeded. In this way, an expensive simulation may be avoided if it seems likely that the respective design variant will violate the constraint and, therefore, will turn out to be unfeasible. The first predefined threshold value may be set to e.g. 99%, 95%, or 90%.

According to a further embodiment of the invention, the respective generated design data record may be ranked within the previously evaluated design data records by means of the comparison. The corresponding simulation may then be skipped if the rank of the respective generated design data record falls below a second predefined threshold value. Here, as usual, a rank is considered lower if it has a higher ranking number. In this way an expensive simulation may be avoided if it seems likely that the currently assessed design variant will perform worse than previously assessed design variants. The ranking may be performed by means of a so-called dense ranking or dense sorting algorithm.

According to a further embodiment of the invention, a statistical sample of performance values may be determined from the predictive performance distribution. Each element of the statistical sample may be ranked within the previously evaluated design data records, resulting in a respective element rank. Moreover, a spread of the element ranks may be determined, and depending on the spread, the corresponding simulation may be skipped. The spread of the element ranks may be considered as an uncertainty of the ranking. If a maximum rank of the spread falls below the second predefined threshold it appears to be rather unlikely that the currently assessed design variant will perform better than previously assessed design variants. Hence, an expensive simulation may be skipped.

According to a further embodiment of the invention, the machine learning module may be trained to generate from a design data record several specific predictive performance distributions each quantifying a different performance quantity of that design variant. For the generated design data records, a pareto optimization with the different performance quantities as target quantities may be performed, resulting in a pareto front. Furthermore, a distance of the respective generated design data record to the pareto front may be determined, and depending on the distance, the corresponding simulation may be skipped. In this way, several different performance quantities can be taken into account for evaluating the respective generated design variant with respect to other design variants. For determining a distance to a pareto front several efficient methods are known, e.g., from the publication "Modified distance calculation in generational distance and inverted generational distance" by Hisao Ishibuchi, Hiroyuki Masuda, Yuki Tanigaki, and Yusuke Nojima, in Antonio Gaspar-Cunha, Carlos Henggeler Antunes, and Carlos Coello (eds), Evolutionary Multi-Criterion Optimization, pp. 110-125, Cham, 2015, Springer International Publishing^{[1]}.

In particular, the respective generated design data record may be ranked within the previously evaluated design data records with regard to their distances to the pareto front. The corresponding simulation may be skipped if the rank of the respective generated design data record falls below a third predefined threshold value. In this way an expensive simulation may be avoided if it seems likely that the currently assessed design variant will perform worse than previously evaluated design variants.

Furthermore, the pareto optimization and the ranking with regard to the distances to the pareto front may be performed for each element of a statistical sample of several specific performance values, resulting in a plurality of element ranks. From that, a spread of the element ranks may be determined and depending on the spread of the element ranks, the corresponding simulation may be skipped as described above.

According to a further embodiment of the invention, the training of the machine learning module may be continued by using simulated performance values and simulated constraint compliance data as training data. In this way the predictions of the machine learning module may be improved by using results of the simulation.

Particular embodiments of the invention are described in the following paragraphs with reference to the figures. The figures illustrate in schematic representation:
- Figure 1: a design system controlling a production system to manufacture a product,
- Figure 2: an inventive design system in a training phase,
- Figure 3: a determination of a pareto front for design data records, and
- Figure 4: an optimization of a product design by an inventive design system.

In the figures, common reference signs denote the same or corresponding entities, which are preferably embodied as described at the respective place.

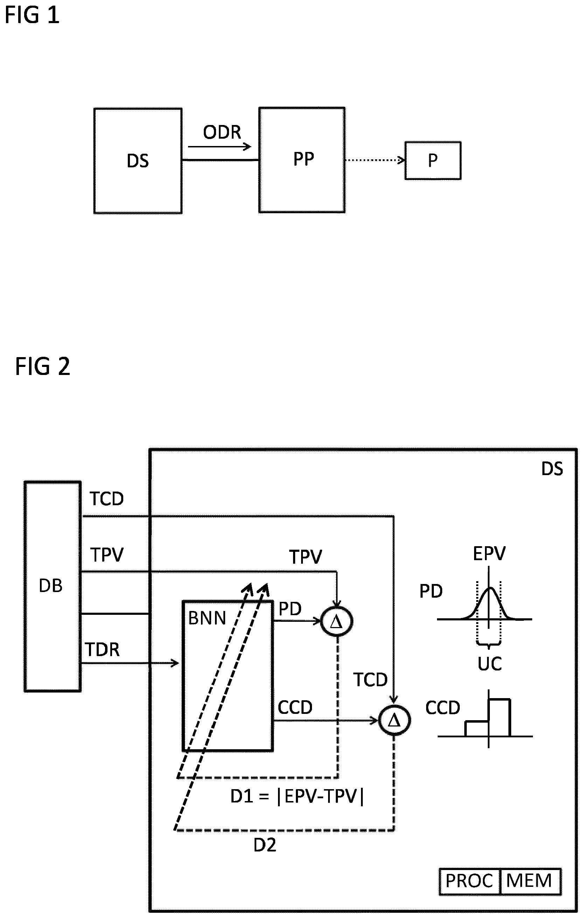

Figure 1 shows in schematic representation, a design system DS coupled to a production system PP and controlling the production system PP to manufacture a product P. The production system PP may be or comprise a production plant, a robot, a machining tool, and/or other devices for manufacturing or machining products by means of design data. The product P to be manufactured may be a robot, a motor, a turbine, a turbine blade, a combustion engine, a machining tool, a vehicle, or a component thereof.

A design or design variant of the product P to be manufactured is specified by design data in the form of one or more design data records. In particular, such design data records may specify a geometry, a structure, a property, a production step, a material, a component, and/or a part of the product P.

According to the present embodiment, the design system DS should be enabled to automatically generate design data records ODR which are optimized with regard to one or more given performance objectives for the product P and which fulfill one or more predefined technical constraints for that product P. In that respect, the terms optimization or optimizing should also comprise the meaning of getting closer to an optimum.

Such performance objectives may pertain to a power, a yield, an efficiency, a speed, a running time, a precision, an error rate, a tendency to oscillate, a resource consumption, an aerodynamic efficiency, an energy efficiency, a pollutant emission, a stability, a wear, a lifetime and/or to other performance quantities of the product P. The constraints may pertain to geometrical limits, temperature limits, pressure limits, speed limits, electrical limits, force limits, power limits, pollution limits, and/or to other requirements which should be fulfilled by the product P.

The design system DS generates such performance-optimizing and constraint-compliant design data records ODR and transmits them to the production system PP. By means of the transmitted design data records ODR, the production system PP is controlled and manufactures the performance-optimized and constraint-compliant product P as specified by that design data records ODR. For manufacturing products specified by design data, many efficient computer-operated manufacturing tools are available.

Figure 2 illustrates an inventive design system DS in a training phase. The design system DS comprises one or more processors PROC for performing the method steps of the invention and one or more data storages MEM for storing related data.

The design system DS is coupled to a database DB and further comprises a machine learning module BNN, which is implemented as a Bayesian neural network according to the present embodiment. Such a Bayesian neural network can be considered as a statistical estimator, which has an intrinsic capability to automatically estimate realistic uncertainties of its predictions. The Bayesian neural network serves the purpose of determining statistical estimation values for e.g., a mean, a variance, a standard deviation, and/or a probability distribution, from empirical data of a sample of a statistical population. A Bayes estimator may particularly optimize a posterior expected value of a loss function, cost function, reward function, or utility function.

By means of known machine learning methods and using sample data from a statistical population, a Bayesian neural network, here BNN, can be trained to estimate a probability distribution or predictive distribution for a given new data record of that statistical population. Additionally, or alternatively to the Bayesian neural network, the machine learning module BNN may comprise or implement a Gaussian process model, which can also be trained to estimate a probability distribution or predictive distribution for a given new data record of a statistical population.

A probability distribution or predictive distribution may be represented by its statistical mean or median together with its statistical variance or standard deviation. In this case, the variance or standard deviation may be regarded as uncertainty of the mean or median value. Additionally or alternatively, an uncertainty of a probability distribution or predictive distribution may be specified by an error interval, a confidence interval, or other measures of a width of that probability distribution or predictive distribution. In that sense, a Bayesian neural network and a Gaussian process model can be regarded as uncertainty-aware machine learning models.

Some pertinent machine learning methods for training uncertainty-aware machine learning models are e.g. described in "Pattern Recognition and Machine Learning" by Christopher M. Bishop, Springer 2011.

According to the present embodiment the product P should be optimized with regard to one or more performance objectives and should fulfill one or more technical constraints. Accordingly, the Bayesian neural network BNN should be trained to generate from a design data record specifying a design variant of the product P, for each of the performance objectives a predictive performance distribution PD of a corresponding performance of that design variant, and for each of the constraints a constraint compliance distribution CCD of a fulfillment or violation of the respective constraint by that design variant.

Here, the term training generally means that a mapping from input data of a machine learning module to output data of that machine learning module is optimized with regard to one or more criteria during a training phase. In the present case, the criteria comprise reproducing statistical distributions of performance values and reproducing statistical distributions of a fulfillment or violation of constraints. The mapping can be optimized by tuning mapping parameters of the machine learning module. In case of artificial neural networks, a connective structure of its neurons and/or weights of connections between the neurons may be varied in order to optimize the mapping. For such optimizations a multitude of numerical standard methods, like e.g. gradient descent methods, particle swarm methods, or genetic algorithms are available.

For training the Bayesian neural network BNN, a large amount of training data stored in the database DB are fed into the design system DS. The training data comprise many training design data records TDR, each specifying a design variant of a product.

Assigned to a respective training design data record TDR, the training data further comprise for each of the performance objectives a corresponding object-specific performance value TPV quantifying an actual objective-specific performance of the respective design variant.

Additionally, the training data comprise, assigned to a respective training design data record TDR, for each of the technical constraints corresponding constraint-specific constraint compliance data TCD indicating whether the respective design variant actually fulfills or violates the respective constraint.

The training design data records TDR are input to the Bayesian neural network BNN as input data. From a respective training design data record TDR, the Bayesian neural network BNN generates for each of the performance objectives an estimated predictive performance distribution PD of the respective objective-specific performance and for each of the constraints an estimated constraint compliance distribution CCD of a fulfillment or violation of the respective constraint.

In the present embodiment, a respective predictive performance distribution PD comprises or is represented by an objective-specific expected performance value EPV, an estimated objective-specific uncertainty UC of the performance value EPV, and an objective-specific statistical sample from the predictive performance distribution PD. Here, the expected performance value EPV represents a statistical mean of the distribution PD and the uncertainty UC represents a width of that distribution PD. The statistical sample may be drawn from the generated predictive performance distribution PD or directly generated by the Bayesian neural network BNN.

A respective constraint compliance distribution CCD, on the other hand, comprises or is represented by a constraint-specific statistical sample, each element of which indicating whether the design variant in question fulfills or violates the respective constraint. The constraint-specific statistical sample may be drawn from the generated constraint compliance distribution CCD or directly generated by the Bayesian neural network BNN.

For each training design data record TDR, the generated predictive performance distributions PD are output by the machine learning module BNN and are compared with the corresponding object-specific performance values TPV. In doing so, a deviation D1 of the object-specific expected performance values EPV from the corresponding performance values TPV is fed back to the Bayesian neural network BNN as indicated by a first dashed arrow in figure 2.

Correspondingly, for each training design data record TDR, the generated constraint compliance distributions CCD are output by the machine learning module BNN and are compared with the corresponding constraint-specific constraint compliance data TCD. In doing so, a deviation D2 of the constraint-specific statistical samples from the corresponding constraint compliance data TCD is also fed back to the Bayesian neural network BNN as indicated by a second dashed arrow in figure 2.

By means of that feedback, the Bayesian neural network BNN is trained to minimize the deviations D1 and D2, at least on average, thus reproducing statistical distributions of objective-specific performance values and statistical distributions of a compliance with constraints. In particular, such a minimization can be performed by minimizing a weighted sum of the deviations D1 and D2 at least on average.

After the training, the Bayesian neural network BNN can be used as a statistical estimator. The trained Bayesian neural network BNN is particularly enabled to generate from a design data record specifying a design variant of a product, for each of the performance objectives a predictive performance distribution PD specifying a probability distribution of a corresponding performance value and for each of the constraints a constraint compliance distribution CCD specifying a probability distribution of a fulfillment or violation of a corresponding constraint.

The predictions of the trained Bayesian neural network BNN can be used for evaluating and optimizing design data records. For taking into account different performance objectives a so-called pareto optimization will be performed.

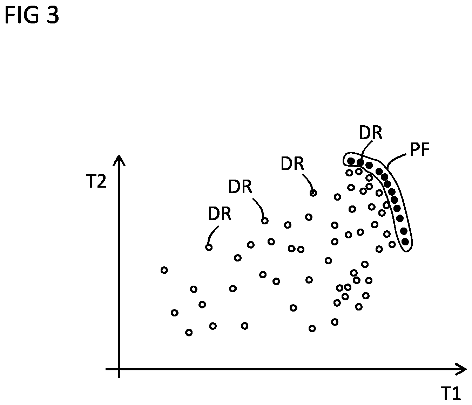

Figure 3 illustrates in schematic representation a pareto optimization and a determination of a pareto front PF for a variety of design data records DR. A pareto optimization is a multi-objective optimization, in which several different target quantities can be simultaneously considered.

The pareto optimization results in the pareto front PF. A pareto front consists of those solutions of a multi-objective optimization, for which a respective target quantity cannot be improved without worsening or negatively affecting another target quantity. In a sense, a pareto front consists of a set of optimal compromises, here optimal compromises of design variants. Conversely, solutions which are not part of a pareto front can be improved with regard to at least one target quantity without worsening any other target quantity, and therefore, can be considered as being sub-optimal in each case. Usually, such sub-optimal solutions can be ruled out in further optimizations, thus reducing a computational effort.

In the present embodiment, the predefined performance objectives are used as target quantities. With regard to figure 3 it is assumed that objective-specific performance values for all performance objectives are allocated to each of the design data records DR.

In figure 3 the design data records DR are plotted into a coordinate system with some exemplary target quantities T1 and T2 as coordinate axes. The design data records DR are located according to their allocated target quantities, i.e., performance values. For the sake of simplicity, only a few of the design data records DR are marked with a reference sign. Those of the design data records which are part of the pareto front PF are visualized by solid circles, while design data records DR which are not part of the pareto front PF are visualized by open circles.

As can be seen from figure 3, the pareto optimization is carried out in the direction of increasing target quantities T1 and T2. For performing such pareto optimizations and for determining a respective pareto front, many efficient standard routines are available.

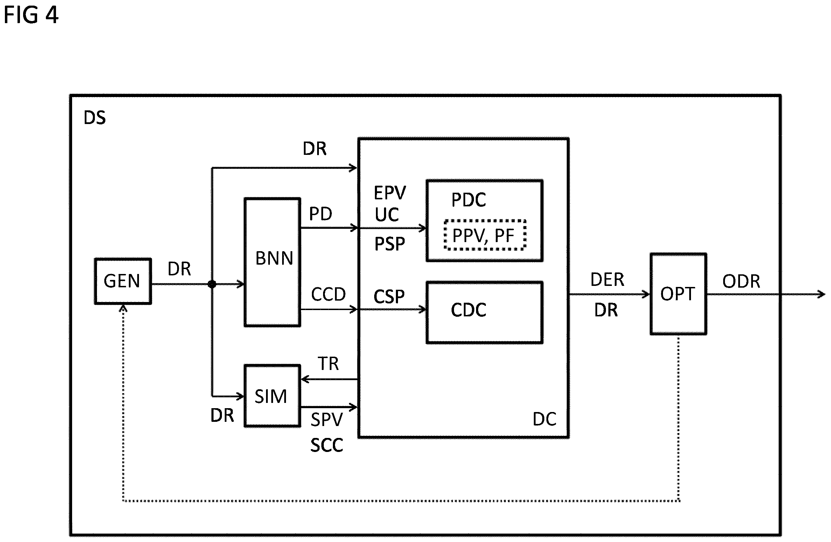

Figure 4 illustrates an optimization of a design of the product P by the design system DS. The latter comprises the Bayesian neural network BNN, which was trained as described above.

The design system DS further comprises a design generator GEN for generating a large number of synthetic design data records DR each specifying a different design variant of the product P. Moreover, the design system DS comprises a simulator SIM, a decision module DC, and an optimization module OPT.

From the design generator GEN the generated design data records DR are fed into the trained Bayesian neural network BNN as input data and into the decision module DC. From a respective design data record DR, the trained Bayesian neural network BNN generates for each of the performance objectives an estimated predictive performance distribution PD of a respective objective-specific performance of the respective design variant, and for each of the constraints an estimated constraint compliance distribution CCD of a fulfillment or violation of the respective constraint by the respective design variant.

The predictive distributions PD and CCD are fed into the decision module DC. Depending on these predictive distributions PD and CCD the decisions module DC decides whether to run or to skip a simulation of the respective design variant by the simulator SIM.

The simulator SIM is enabled to carry out a detailed physical high-fidelity simulation of a design variant on the basis of a corresponding design data record DR. For that purpose, a respective design data record DR is transmitted from the design generator GEN to the simulator SIM. For performing such detailed physical simulations many efficient methods, e.g. finite element methods, are known.

In the present case, the simulator SIM is particularly enabled to determine for each of the performance objectives an objective-specific simulated performance value SPV of the simulated design variant. Furthermore, the simulator SIM is enabled to determine for each of the constraints constraint-specific constraint compliance data SCC indicating whether the respective constraint is fulfilled or violated by the simulated design variant.

Usually, a performance and a constraint compliance can be determined quite accurately by simulation. However, such accurate physical simulations often require considerable computation resources. An execution of trained machine learning modules, like BNN, on the other hand, normally requires much less computational effort. Hence, it appears advantageous to skip expensive simulations if appropriate.

According to the present embodiment, the simulation is skipped if the constraint compliance distribution CCD indicates that one or more of the constraints are likely to be violated. In this case the corresponding design variant is unlikely to be feasible. The simulation is not skipped if the performance values as determined by the trained Bayesian neural network BNN turn out to be not reliable. Here, the reliability of a performance value can be estimated by means of the corresponding predictive performance distribution PD. Moreover, the simulation may be skipped if the performance values as determined by the trained Bayesian neural network BNN are worse (taking their reliability into account) than performance values of many other previously evaluated design variants. In this case it is unlikely that the design variant in question will turn out to be a promising design variant.

For the constraint-based decision, the decision module DC comprises a constraint decider CDC. The decision is based on the constraint-specific constraint compliance distributions CCD.

According to the present embodiment a respective constraint compliance distribution CCD comprises a constraint-specific statistical sample CSP, each element of which indicating whether the design variant in question fulfills or violates the respective constraint. The respective statistical sample CSP is fed into the constraint decider CDC, which in turn determines the percentage of elements of this sample CSP violating the respective constraint. The constraint decider CDC then compares that percentage with a first predefined threshold value of e.g. 99%, 95%, or 90%. If that first predefined threshold value is exceeded, the constraint decider CDC flags the design variant in question as infeasible. In this case the simulation of that design variant is skipped. As that design variant is very likely to violate one or more constraints the design variant may be discarded as a whole, thus skipping any further evaluation steps.

For the performance-based decision, the decision module DC comprises a performance decider PDC. The decision is based on the objective-specific predictive performance distributions PD.

According to the present embodiment each predictive performance distribution PD comprises an objective-specific expected performance value EPV, an estimated objective-specific uncertainty UC of the performance value EPV, and a statistical sample PSP from the predictive performance distribution PD. Here, each element of the statistical sample PSP quantifies an objective-specific performance of the design variant in question. The expected performance values EPV, the estimated uncertainties UC, and the statistical samples PSP are fed into the performance decider PDC.

The performance decider PDC comprises a database storing objective-specific performance values PPV for each of the performance objectives of preferably all previously evaluated design variants. Here, a respective performance value PPV may be an expected performance value derived by means of the machine learning module BNN, or, if a simulation was carried out, may be a simulated performance value as determined by the simulator SIM.

For the previously evaluated design variants the performance decider PDC carries out a pareto optimization with the different performance objectives as target quantities. A resulting pareto front PF is stored in the performance decider PDC. Moreover, for each of the previously evaluated design variants their distance to the pareto front PF is determined and allocated to that previously evaluated design variant.

In the present embodiment, the distances to the pareto front are preferably determined according to the so-called "Inverted Generational Distance Plus (IGD+)" metric, as described in the above-mentioned publication [1].

Based on that, the performance decider PDC also determines for the design variant in question a distance of the expected performance values EPV belonging to that design variant to the pareto front PF. According to that distance the design variant in question is ranked within the previously evaluated design variants resulting in a design variant rank.

Furthermore, the performance decider PDC also determines for each element of the statistical samples PSP of the design variant in question its distance to the pareto front PF. On that basis, the elements of each sample PSP are ranked within the previously evaluated design data variants with regard to that distance.

Generally, the ranks of different elements belonging to the same design variant in question may differ. Accordingly, a spread of these ranks can be determined as a measure of uncertainty of the ranking of that design variant in question. According to the present embodiment, the performance decider PDC determines the spread of ranks of the design variant in question and allocates it to this design variant. Preferably, the spread is determined as a statistical standard deviation or variance of the different ranks belonging to the same design variant in question.

For comparability, the calculated ranks are preferably normalized, e.g., to lie between 0 (worst rank) and 1 (best rank).

Depending on the design variant rank and the spread of ranks, both determined for the design variant in question, the performance decider PDC decides whether a simulation of that design variant in question is skipped.

In particular, the performance decider PDC may decide to skip the simulation if the following inequality holds:
DVR + A*SR < B, where DVR is the design variant rank, SR is the spread of ranks, A is an uncertainty scale, and B is a predefined threshold value.

By setting A > 0 (e.g. 0.1, 0.2, 0.5) uncertain designs will be penalized. Setting B to e.g. 0.75 means that the corresponding design variant is not simulated if DVR + A*SR as estimated by BNN and PDC lies in the lower 75% of all ranks. In general, a simulation is skipped if the design variant rank DVR and its estimated uncertainty SR indicate that the design variant in question is unlikely to be competitive to previously evaluated design variants.

If the simulation is not skipped by decisions of the constraint decider CDC or the performance decider PDC the decision module DC generates a trigger signal TR and transmits it to the simulator SIM.

The trigger signal TR causes the simulator SIM to simulate the design variant in question specified by the respective synthetic design data record DR. As a result of the simulation, the simulator SIM generates for each of the performance objectives a simulated objective-specific performance value SPV quantifying an objective-specific performance of that design variant. Moreover, the simulator SIM generates for each of the simulated constraint-specific constraint compliance data SCC indicating whether the respective constraint is fulfilled or violated by the simulated design variant. The simulated performance value SPV and the simulated constraint compliance data SCC are then transmitted from the simulator SIM to the decision module DC.

In order to evaluate the design variant in question, the decision module DC creates a design evaluation record DER and allocates it to the corresponding design data record DR.

If the simulation is skipped, the decision module DC inserts the objective-specific expected performance values EPV and constraint-specific constraint compliance data derived from the constraint compliance distributions CCD into the design evaluation record DER. Preferably, the decision module DC determines from the statistical sample CSP of a respective constraint compliance distribution CCD the probability that the corresponding constraint is fulfilled. These probabilities may then be inserted into the design evaluation record as constraint compliance data.

Otherwise, if the simulation is run, the decision module DC inserts the simulated performance values SPV and the simulated constraint compliance data SCC into the design evaluation record DER.

Furthermore, the performance values EPV or SPV, respectively, are stored in the database of the performance decider PDC as objective-specific performance values PPV.

Finally, the generated design data records DR and the allocated design evaluation records DER are transmitted from the decision module DC to the optimization module OPT. Depending on the received design evaluation records DER, the optimization module OPT selects from the design data records DR one or more design data records which fulfill the constraints, and which exhibit highest or particular high performance values. Here, a design data record DR may be considered as being constraint-compliant if the constraint compliance data indicate a compliance probability above a given threshold value of e.g. 99%, 95%, or 90%.

From the one or more selected design data records DR, the optimization module OPT takes or interpolates a performance-optimizing and constraint-compliant design data record ODR. The performance-optimizing design data record ODR is then output in order to control the production system PP as described above.

According to an advantageous implementation, the optimization module OPT may influence the design generator GEN to drive the generation of the design data records DR in the direction of design variants with higher performance and/or better constraint compliance. This influence is indicated by a dotted arrow in figure 4.

Moreover, the simulated performance values SPV and the simulated constraint compliance data SCC may be used to continue a training of the Bayesian neural network BNN. As the simulation results are usually quite accurate, the training status of the Bayesian neural network BNN may be improved in this way.

## Claims

1. A computer-implemented method for controlling a production system (PP) to manufacture a product (P) satisfying a predefined technical constraint, comprising:
a) providing a machine learning module (BNN) trained to generate from a design data record (DR) specifying a design variant of the product (P)
- a predictive performance distribution (PD) of a performance of that design variant, and
- a constraint compliance distribution (CCD) of a fulfillment or violation of the constraint by that design variant,
b) generating a variety of design data records (DR) each specifying a different design variant of the product (P),
c) for a respective generated design data record (DR)
- generating a predictive performance distribution (PD) and a constraint compliance distribution (CCD) by the machine learning module (BNN),
- comparing the predictive performance distribution (PD) with performance values (PPV) of previously evaluated design data records,
- depending on the constraint compliance distribution (CCD) and the comparison, either running or skipping a simulation (SIM) of the corresponding design variant, and
- outputting a design evaluation record (DER) comprising a performance value and constraint compliance data each derived from the simulation if the simulation (SIM) is run or, otherwise, each derived from the predictive performance distribution (PD) and the constraint compliance distribution (CCD),
d) depending on the design evaluation records (DER) selecting from the variety of design data records (DR) a performance-optimizing and constraint-compliant design data record (ODR), and
e) outputting the selected design data record (ODR) for controlling the production system (PP).

2. Method according to claim 1, wherein
the machine learning module (BNN) comprises or implements a Bayesian machine learning model, a Bayesian neural network and/or a Gaussian process model.

3. Method according to one of the preceding claims, further comprising:
checking, by means of the constraint compliance distribution (CCD) of the respective generated design data record (DR),
whether a probability of violating the constraint exceeds a first predefined threshold value, and
skipping the corresponding simulation if the predefined threshold value is exceeded.

4. Method according to one of the preceding claims, wherein the respective generated design data record (DR) is ranked within the previously evaluated design data records by means of the comparison, and
the corresponding simulation is skipped if the rank of the respective generated design data (DR) record falls below a second predefined threshold value.

5. Method according to one of the preceding claims, wherein
a statistical sample (PSP) of performance values is determined from the predictive performance distribution (PD),
each element of the statistical sample (PSP) is ranked within the previously evaluated design data records, resulting in a respective element rank,
a spread of the element ranks is determined, and
depending on the spread the corresponding simulation is skipped.

6. Method according to one of the preceding claims, wherein the machine learning module (BNN) is trained to generate from a design data record (DR) several specific predictive performance distributions (PD) each quantifying a different performance quantity of that design variant,
for the generated design data records (DR), a pareto optimization with the different performance quantities as target quantities is performed, resulting in a pareto front (PF),
a distance of the respective generated design data record (DR) to the pareto front (PF) is determined, and
depending on the distance the corresponding simulation is skipped.

7. Method according to claim 6, wherein
the respective generated design data record (DR) is ranked within the previously evaluated design data records with regard to their distances to the pareto front (PF), and
the corresponding simulation is skipped if the rank of the respective generated design data record (DR) falls below a third predefined threshold value.

8. Method according to one of the preceding claims, wherein the training of the machine learning module (BNN) is continued by using simulated performance values (SPV) and simulated constraint compliance data (SCC) as training data.

9. A system (DS) for controlling a production system (PP) to manufacture a product (P), the system (DS) comprising means for carrying out a method according to one of the preceding claims.

10. A computer program product for controlling a production system (PP) to manufacture a product (P), the computer program product comprising instructions which, when the program is executed by a computer, cause the computer to carry out a method according to one of the claims 1 to 8.

11. A non-transient computer readable storage medium storing a computer program product according to claim 10.
